# EUROPEAN PATENT SPECIFICATION

(11) **EP 3 443 832 B1**
(45) Date of publication and mention of the grant of the patent: **24.03.2021**
(21) Application number: 18197784.4
(22) Date of filing: 14.04.2014
(51) Int. Cl.: A01D 34/82, A01D 34/90

(54) **VEGETATION CUTTER**
PFLANZENSCHNEIDER
COUPE DE VÉGÉTATION

(30) Priority: 12.04.2013 WO PCT/CN2013/074171
(43) Date of publication of application: 20.02.2019
(62) Divisional of application: 14164539.0
(73) Proprietor: Techtronic Outdoor Products Technology Limited, Hamilton HM12 (BM)
(72) Inventor: CHUNG, Koon for, New Territories, Hong Kong (HK)
(74) Representative: Grünecker Patent- und Rechtsanwälte PartG mbB

(56) References cited:
- EP-A1- 1 995 024
- EP-A1- 2 474 218
- US-A1- 2012 246 945
- US-A1- 2014 013 542

## Description

### Background

The current invention reputes to vegetation cutters.

One type of vegetation cutter includes a support shaft having a power source at one end and a tool head at the other end. A handlebar is located part way long the support shaft between the power source and the tool head. Typically the handlebar can be moved between an operational position and a storage position to make the vegetation cutter more compact for storage.

According to its abstract, EP-A-1995024 describes a tool having a component e.g. cutting handle, movably arranged in a holder of the tool. A fixing device is provided for fixing the component at the tool in two positions of the component. The fixing device has threads provided as right and left threads. The threads are in connection with an actuating device such that the threads are simultaneously actuated. The holder has two accommodating shells, and the actuating device is rotated against the accommodating shells around a rotational axis, which lies in a movable direction of movable sections.

### Summary of the Invention

It is desirable that the vegetation cutter cannot be operated when the handlebar is not in the operational position. Accordingly, the present invention provides a handlebar carrier and also a vegetation cutter as set forth in any one of the appended claims.

In a first particular aspect of the invention there is provided a handlebar carrier for a power operated tool, the carrier comprising a carrier body and handlebar clamp attached to the carrier body, the handlebar clamp movably coupling the handlebar to the carrier body, the handlebar movable between an operational position and a first non-operational position, and a motor kill-switch located on or with the handlebar carrier and operable to prevent operation of the motor when the handlebar is moved out of the operational position.

In a second particular aspect of the invention there is provided a vegetation cutter comprising a support shaft having a first end and a second end, a tool head located at the first end of the support shaft, the tool head carrying a rotatably drivable tool, a motor located at the second end of the support shaft for driving the tool via a drive shaft located in the support shaft, a handlebar located between the tool head and the motor for manipulating the vegetation cutter, a handlebar carrier movably coupling the handlebar to the support shaft, the handlebar movable via the handlebar carrier between an operational position and a first non-operational position, and a motor kill-switch located on or with the handlebar carrier and operable to prevent operation of the motor when the handlebar is moved out of the operational position.

Preferably, the handlebar is movable via the handlebar carrier about a first axis between the operational position and the first non-operational position, and is movable about a second axis between the operational position and a second non-operational position, the motor kill-switch operable to prevent operation of the motor when the handlebar is moved out of the operational position towards either the first non-operational position or the second non-operational position.

Preferably, the handlebar carrier includes a carrier body and a clamp body having a released position and a clamped position securing the handlebar in the operational position, and wherein the motor kill-switch is operable to prevent operation of the motor when the carrier body and a clamp body are in the released position or when the handlebar is not in the operational position.

Further aspects of the invention will be apparent from the following description and drawings which are given by way of example only.

### Brief Description of the Drawings

The invention will now be described by way of example only with reference to the appended drawings in which:
Figure 1 is a perspective illustration of a vegetation cutter with a handlebar in an operational position,
Figure 2 is a perspective illustration of the vegetation cutter with the handlebar in an intermediate non-operational position,
Figure 3 is a perspective illustration of the vegetation cutter with the handlebar in a non-operational position,
Figure 4 is a side illustration of the vegetation cutter with the handlebar in the non-operational position,

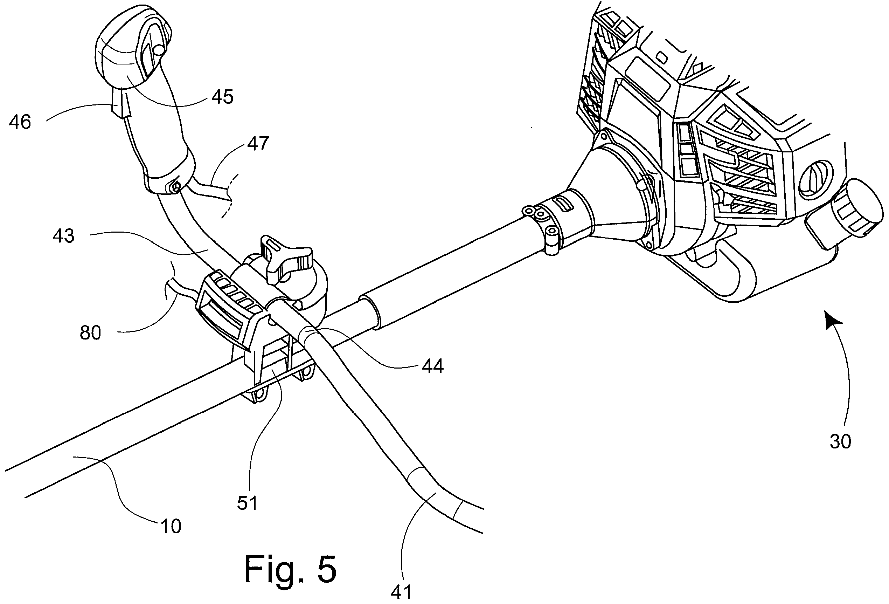

Figure 5 is a perspective illustration of a handlebar carrier mounting the handlebar to the vegetation cutter,

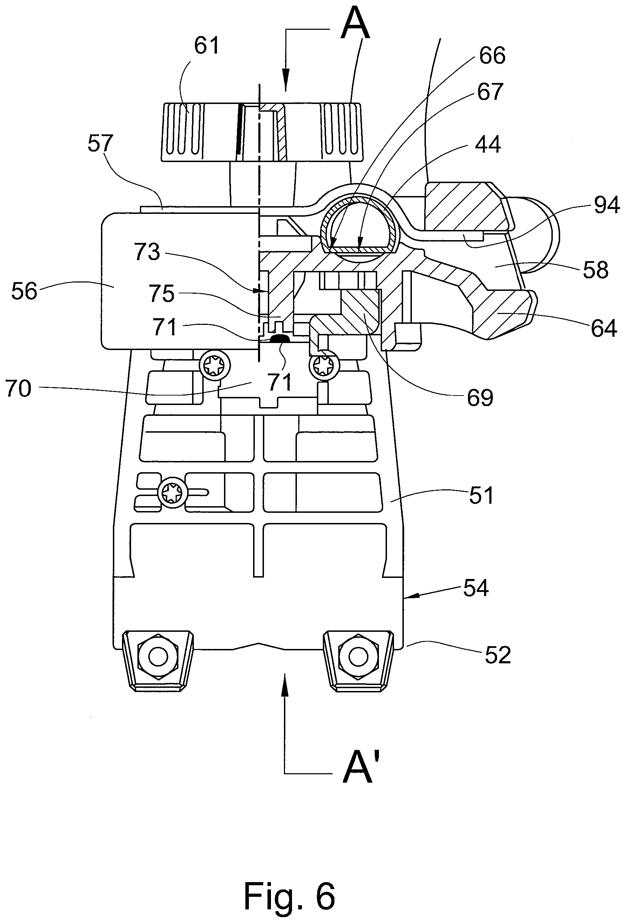

Figure 6 is an end section view through the handlebar carrier,

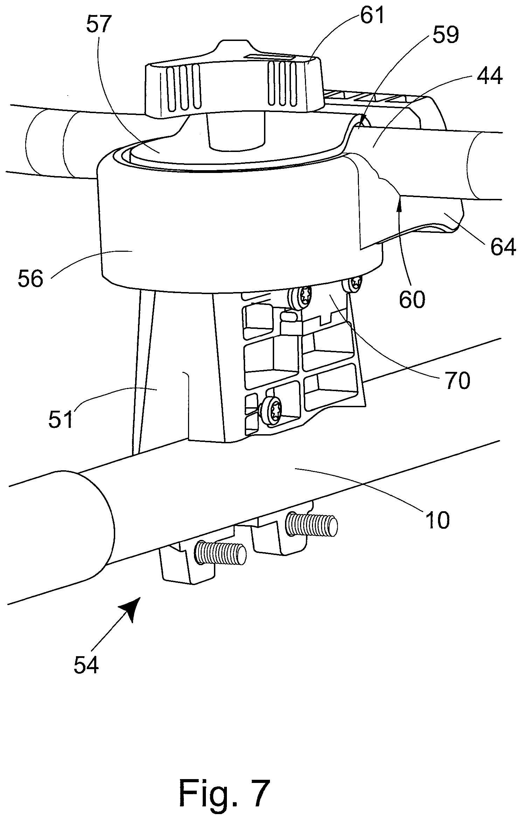

Figure 7 is a perspective section view through the handlebar carrier,

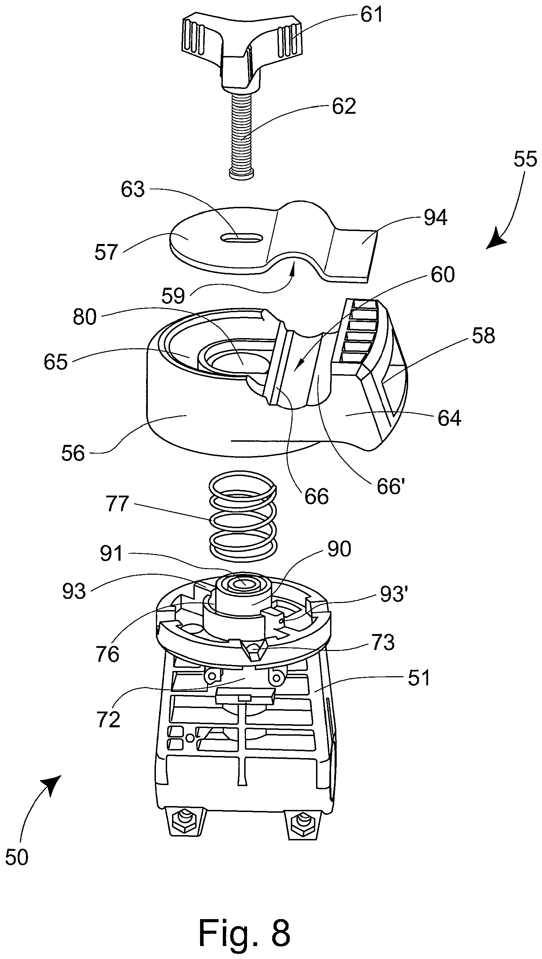

Figure 8 is an exploded view of the handlebar carrier, and

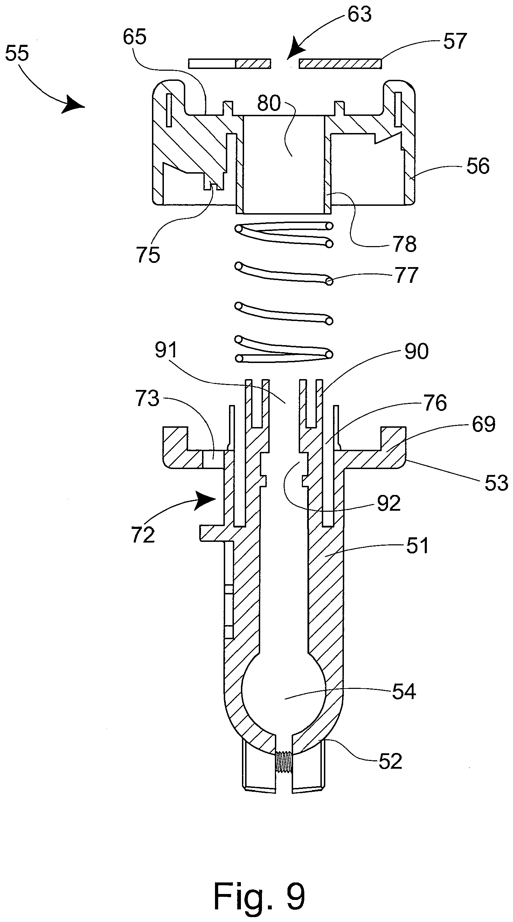

Figure 9 is an exploded section view through the handlebar carrier.

### Description of the Preferred Embodiments

Referring to the drawings there is shown a brush or vegetation cutter. The vegetation cutter comprises a hollow support shaft 10 having a tool head 20 at a first end 11 of the shaft 10 and a power unit 30 at a second end 12 of the shaft 10. A rotational drive shaft (not shown) is located within the hollow support shaft 10 for delivering driving torque from the power unit 30 to the tool head 20. In the preferred embodiment the power unit 30 comprises an internal combustion engine, but in alternative embodiments the power unit 30 could be an electric motor. The power unit 30 is self-contained with a fuel tank or battery, as required, located with a motor and a carburetor or electric motor control means. The tool head 20 comprises an angled drive coupling 21 coupled with the drive shaft and supporting a rotary holder 22 for a cutter 23. In the preferred embodiment the cutter 23 is a cutting blade, but in alternative embodiments may be a cutting line on a line spool. The tool head 20 also comprises a blade guard 24 extending around a portion of the tool head 20, which in use is closest to the operator and shielding the operator from the cutter 23.

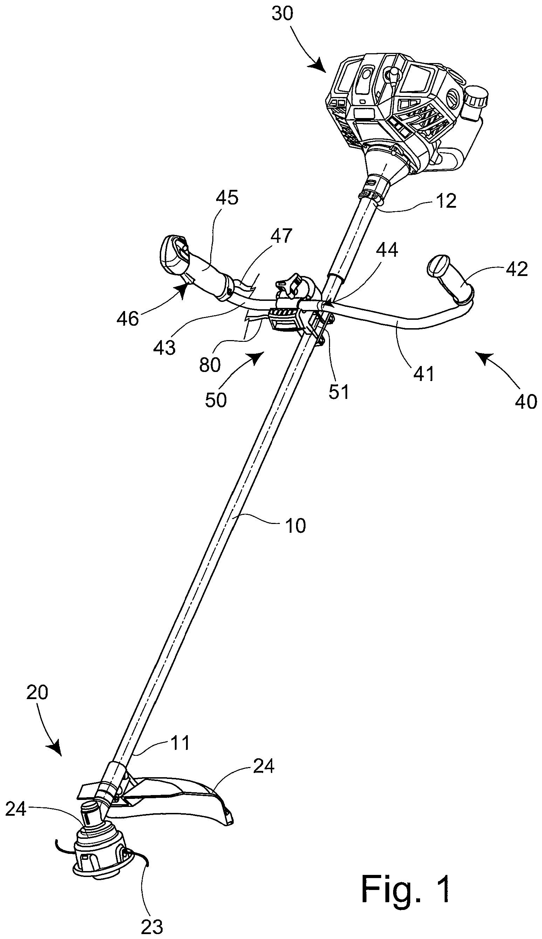

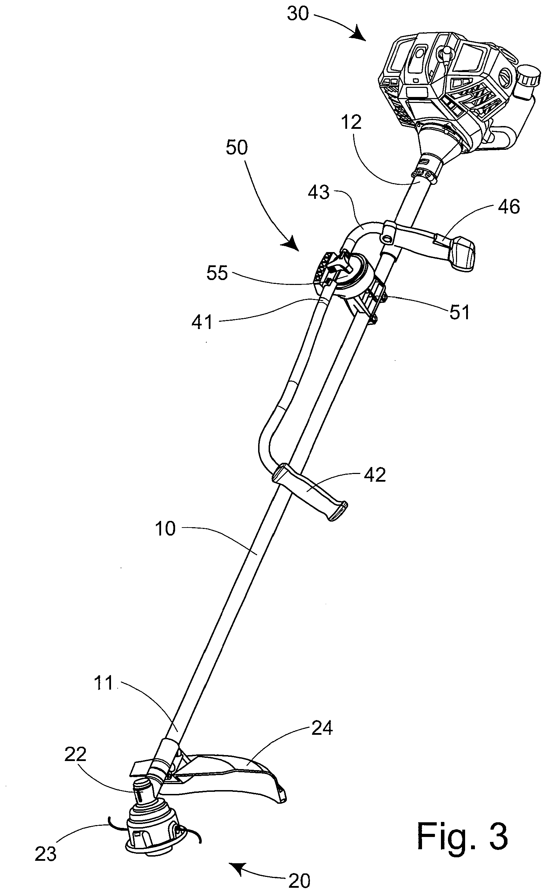

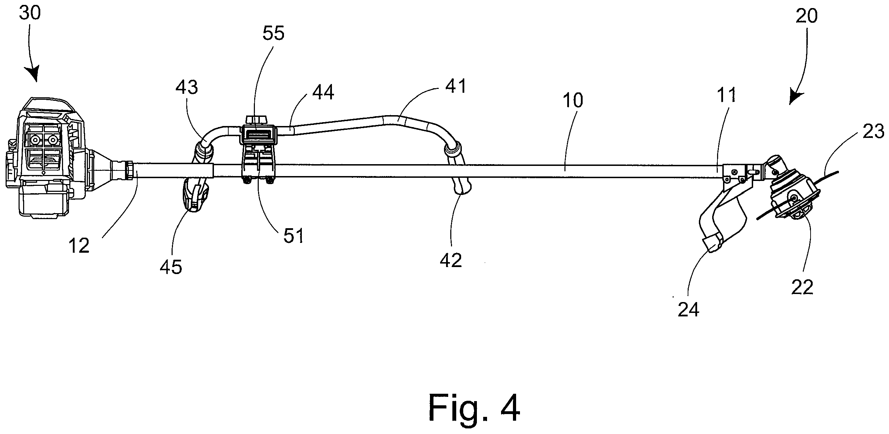

The vegetation cutter also includes a handlebar 40 located intermediate the motor 30 and the tool head 20. The handlebar 40 is attached to the support shaft 10 by a handlebar carrier 50 that allows the handlebar 40 to be moved from an operational position, for example as shown in Figure 1, in which a user can hold the handlebar 40 to support the vegetation cutter in use and a non-operational or stored position, for example as shown in Figure 3 and Figure 4. The handlebar 40 comprises a substantially elongate centre section 41 with bent ends section 42, 43 at either end of the centre section 41. The bent ends 42, 43 form handgrips of the handlebar 40 for holding by a user with respective hands in the manner of, for example, holding a bicycle handlebar. The handlebar 40 is attached to the support shaft 10 by way of the handlebar carrier 50 at or near the center 44 of the centre portion 41 of the handlebar and in the 'in use' position the bent handgrip end portions 42, 43 extend substantially upwardly. On at least one of the handgrip portions 43 is a control means 45 for the power unit 30. In the preferred embodiment the control means 45 is a trigger 46 which can be operated by a finger of the tool operator in order to control ON, OFF and in some embodiments speed functions of the power unit 30. A control cable 47 (only partly shown) extends from the control means 45 back to the power unit 30 to relay a control signal from the trigger 46 to the power unit 30. In the preferred embodiment the control cable 47 is a throttle cable for moving for example a butterfly valve on a carburetor, or in an alternative embodiment the control cable 47 may be an electric cable transmitting an electric control signal to an electric motor controller.

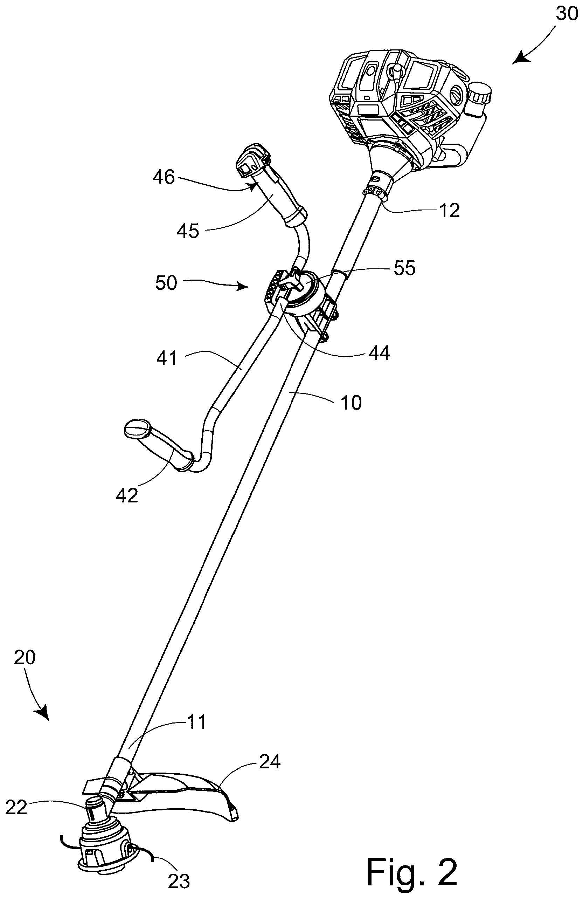

The handlebar carrier 50 couples the handlebar 40 to the support shaft 10 and allows the handlebar 40 to be moved between the operational position and the non-operational position. The handlebar carrier 50 locks the handlebar 40 in the operational position or when the handlebar carrier 50 is released the handlebar 40 can be rotated about a first axis to an intermediate non-operational position as illustrated in Figure 2, and also the about second axis from the intermediate non-operational position to the non-operational position such the handlebar 40 is in the stored position as shown in Figure 3 and Figure 4. In the preferred embodiment the first axis is orthogonal to a longitudinal axis of the support shaft 10 such that in the intermediate non-operational position the handlebar 40 is parallel with the support shaft 10. Correspondingly in such an embodiment the second axis is orthogonal to the first axis and parallel with the longitudinal axis of the support shaft 10. The handlebar carrier 50 comprises a carrier body 51 having a circular pipe clamp 54 arranged at its first end 52 for clamping the handlebar carrier 50 at a position along the support shaft 10. The pipe clamp 54 maybe releasable for allowing the position of the handlebar carrier 50 to be changed along the length of the support shaft 10, but in normal circumstances the position of the handlebar carrier 50 on the support shaft 10 would not need to be regularly adjusted by a tool operator. The body 51 of the handlebar carrier 50 extends upwardly and away from the support shaft 10 when the vegetation cutter is held in the in-use position. The second end 53 of the carrier body has a circular flange member 69 for cooperating with a handlebar clamp 55. Coaxial with the carrier body 51 is a circular recess channel 76 surrounding a central column 90. A coaxial bore 91 in the column 90 has located therein a fixing nut 92. A helical spring 78 is sized to locate within the recess channel 76 of the carrier body 51.

A handlebar clamp 55 for co-operating with the flange 69 end of the carrier body 51 comprises a clamp body 56 and a clamping plate 57. The clamp body 56 has an outer skirt for cooperating with flange 69 of the carrier body 51 and an inner skirt which extends downwardly and, in situ, into the circular channel 76 of the carrier body 51 when the clamp body 56 and carrier body 51 are brought into co-operating engagement. The skirt 78 captures the spring 77 within channel 76 of the carrier body 51. The column 90 of the carrier body extends through an internal bore 80 of the handlebar clamp body 56. The walls of the bore 80 form the downwardly extending skirt 78. When in the co-operating engagement the clamp body 56 is rotationally movable with respect to the carrier body 51. The flange 69 of the carrier body 51 has to radially extending the taps 93. A downwardly extending finger 75 of the clamp body 56 engages with taps 93 of the flange at respective rotational orientations of the clamp body 56. The range of rotational movement of the clamp body 56 with respect to the carrier body 51 is limited by said taps 93 and finger 75.

The generally circular clamp body 56 has a tail portion 64 within which is located an elongate slot 58. The upper surface of the clamp body 56 has a recess area 65. A clamping plate 57 has a tail tap 94 which engages within the slot 58 of the tail portion 64 of the body 56. The clamping plate 57 then locates within the recess 65 on top of the clamp body 56. The clamp body 56 and clamping plate 57 has complimentary semi-circular handlebar clamping channels 59, 60 which are located to one side of the central bore 80 and between the bore 80 and the tail portion 64 of the body 56. The centre portion 41 of the handlebar 40 is received within the complimentary channels 59, 60 for clamping the handlebar portion 41 between the clamp body 56 and clamping plate 57. The clamp body 56 and clamping plate 57 are held together and the handlebar clamp 55 secured to the carrier body 51 by a clamping bolt 61 having a threaded shank 62 engageable with the fixing nut 92 held within the carrier body 51. The clamp body 56, clamping plate 57 and carrier body 51 have respective corresponding central apertures 63, 80, 91 for receiving the threaded shank 62 passing though the apertures 63, 80, 91. The clamping bolt 61 is threadedly engaged with the fixing nut 92 and clamps the clamp body 56 and clamping plate 57 together and to the carrier body 51 by turning the bolt 61 to move the threaded shank 62 along the nut 92 towards the carrier body 51. The handlebar clamp 55 is released by releasing the bolt 61 from the nut 92. When the bolt 61 is released the clamp body 56 may be rotated about the bolt 61 with respect to the carrier body 51, and at the same time rotating the handlebar 40 about the first axis between the operational position and the intermediate non-operational position, that is to say from the position shown in Figure 1 to the position shown in Figure 2. In the unclamped condition the centre portion 41 of the handlebar 40 can also rotate within the complimentary recess 59, 60 of the clamshell clamp portions so that the handlebar 40 can be rotated about the second axis from the intermediate non-operational position to the non-operational position, that is to say from the position shown in Figure 2 to the position shown in Figures 3 and 4.

The semi-circular handlebar clamping recess 60 of the clamping body 56 has flattened shoulder surface 66. The center 44 of the handlebar 40 has a flat profile 67 along one side. The flat profile 67 cooperates with the flatten shoulder 66 of the recess 60 in order to index the handlebar 40 about the second axis in its intended operational position. In additional, in the operational position shown in Figure 1, the finger 75 of the clamp body 56 engages a first one of the taps 93 on the flange of the carrier body 51. When the clamp body 56 is rotated through 90-degrees to the intermediate operational position the finger 75 engages the second one of the taps 93. Thus, the finger 75 and taps 93 index the handlebar 40 between the operational position and the intermediate non-operational position. The flat profile 67 in cooperation with the flatten shoulders 66 in the recess 60 index the handlebar 40 between the intermediate in operational position and a stored position.

In order that the power source 30, being either an internal combustion engine or an electric motor, cannot operate when the handle is not in the operational position, a kill-switch 70 is provided with the handlebar carrier 50. Wires 80 connect the kill-switch 70 with the control means 45 or the power source 30 control as required by its operation means. The kill-switch 70 can be a normally open or normally close switch circuit, depending on the power source operational requirements. For example, when an internal combustion engine is used in the preferred embodiment the kill-switch might be wired as normally closed contact that grounds the coil of the engine thus preventing ignition spark and killing the engine. When the handle is moved to the operational position the kill-switch contacts are opened such that the coil is no longer grounded and a spark can be produced to operate the engine. If an electric motor is used in an alternative embodiment the kill-switch could be wired in series with the control means 45 such that unless the kill-switch is closed the trigger cannot cause operation of the motor. Alternatively the kill-switch could be wired as normally open or normally closed contacts that send a kill signal to the electric motor controller. In the preferred embodiment, the kill-switch 70 is a "micro-switch" of a suitable and known type that is located within a recess 72 of the carrier body 51 immediately below the flange 69. An opening or aperture 73 is provided in the flange adjacent the recess 72. Referring to the drawings it can be seen that the micro-switch has a switch button 71 that when depressed causes the switch contacts to change states, for example from a close state to an open state or from an open state to a close state as necessary for the particular kill-switch arrangement of the power source 30. The kill-switch is located within complimentary recess 72 with the button 71 adjacent and engageable through opening or aperture 73 is provided in the flange. When the clamp body 56 and carrier body 51 are rotationally aligned in the operational position the finger 75 of the clamp body 56 is aligned with the opening or aperture 73 provided in the flange. The clamp body 56 and carrier body 51 are biased apart by the spring 77 in recess 76. When the bolt 61 is engaged to clamp the handlebar 40 the clamp body 56 and carrier body 51 are moved together against the spring bias. The finger 75 is moved to project through opening or aperture 73 and at the same time to depress the micro-switch button 71 in order to change the state of the micro-switch contacts and enable operational of the power source 30. At the same time the handlebar 40 is clamped between the clamp body 56 and clamping plate 57.

Thus, the handlebar clamp 55 is provided with a kill-switch 70 that has a button 71 for enabling the power source 30 of the vegetation cutter only when the handlebar 40 is in the operational position. If the clamping bolt 61 is not tightened to secure of the handlebar clamp 55, the kill-switch button 71 is not depressed and the power source 30 is not enabled. If the handlebar 40 is rotated about the first axis away from the operational position to the intermediate non-operational position, the finger 75 is not aligned with opening or aperture 73 and the kill-switch button 71 cannot be depressed to enable the power source 30, even when the clamp 55 is properly closed. Thus, the power source 30 of the vegetation cutter can only operate when the handlebar carrier 50 is correctly secured to the support shaft 10 and the handlebar 40 is correctly in the operational position, and the clamshell clamp 55 of the handlebar carrier 50 clamping the handlebar 40 is correctly closed and clamped.

## Claims

1. A handlebar carrier (50) for coupling a handlebar (40) to a power operated-tool, the power tool including a support shaft (10) and an internal combustion engine (30), the handlebar carrier (50) comprising:
a carrier body (51) for coupling to the support shaft (10); and
a handlebar clamp (55) attached to the carrier body (51) and arranged to movably couple the handlebar (40) to the carrier body (51) such that the handlebar (40) is movable between an operational position and a first non-operational position,
**characterized in that** the handlebar carrier (50) further includes a kill-switch (70) operable to prevent operation of the internal combustion engine (30) when the handlebar (40) is moved out of the operational position.

2. The handlebar carrier (50) of claim 1, wherein the handlebar (40) is movable via the handlebar carrier (50) about a first axis between the operational position and the first non-operational position, and the handlebar (40) is further movable about a second axis between the first non-operational position and a second non-operational position, wherein the second axis is different from the first axis; and optionally,
wherein the second axis is orthogonal to the first axis and parallel to a longitudinal axis of the support shaft (10).

3. The handlebar carrier (50) of claim 1 or 2, wherein the carrier body (51) and the handlebar clamp (55) includes a released configuration and a clamped configuration securing the handlebar (40) in the operational position; and
wherein the kill-switch (70) is further operable to prevent operation of the internal combustion engine (30) when the carrier body (51) and the handlebar clamp (55) are in the released configuration.

4. The handlebar carrier (50) of claim 3, wherein the handlebar clamp (55) comprises a clamp body (56) and a clamping plate (57) having complementary semi-circular handlebar clamping channels (59, 60) for receiving the handlebar (40); and
the handlebar carrier (50) further comprises a clamping bolt (61) for releasably clamping the clamp body (56) and the clamping plate (57) and for changing between the released configuration and the clamped configuration.

5. The handlebar carrier (50) of claim 4, wherein when the clamping bolt (61) is released, the clamp body (56) is rotatable about the clamping bolt (61) with respect to the carrier body (51) for rotating the handlebar (40) between the operational position and the first non-operational position.

6. The handlebar carrier (50) of claim 4 or 5, wherein the clamp body (56) comprises a finger (75) for actuating the kill-switch (70) when the finger (75) is aligned with the kill-switch (70).

7. The handlebar carrier (50) of any one of claims 1 to 6, wherein the carrier body (51) comprises a pipe clamp (54) that is releasable for changing a position of the handlebar carrier (50) along the support shaft (10).

8. The handlebar carrier (50) of any one of claims 1 to 7, wherein the kill-switch (70) is arranged to ground a coil of the internal combustion engine (30) to prevent generation of ignition spark so as to prevent operation of the internal combustion engine (30) when the handlebar (40) is moved out of the operational position.

9. A vegetation cutter comprising:
a support shaft (10) having a first end and a second end;
a drive shaft located in the support shaft (10);
a tool head (20) located at the first end of the support shaft (10) and arranged to carry a rotatably drivable tool;
an internal combustion engine (30) located at the second end of the support shaft (10), for driving the rotatably drivable tool via the drive shaft;
a handlebar (40) located between the tool head (20) and the internal combustion engine (30), for allowing a user to manipulate the vegetation cutter;
a handlebar carrier (50) movably coupling the handlebar (40) to the support shaft (10), the handlebar (40) being movable via the handlebar carrier (50) between an operational position in which the user can hold the handlebar (40) to support the vegetation cutter in use and a first non-operational position;
**characterized in that** the handlebar carrier (50) includes a kill-switch (70) operable to prevent operation of the internal combustion engine (30) when the handlebar (40) is moved out of the operational position.

10. The vegetation cutter of claim 9, wherein the handlebar carrier (50) comprises:
a carrier body (51) and a handlebar clamp (55), the carrier body (51) and the handlebar clamp (55) having a released configuration and a clamped configuration securing the handlebar (40) in the operational position; and
wherein the kill-switch (70) is further operable to prevent operation of the internal combustion engine (30) when the carrier body (51) and the handlebar clamp (55) are in the released configuration.

11. The vegetation cutter of claim 10, wherein the handlebar (40) is movable via the handlebar carrier (50) about a first axis between the operational position and the first non-operational position, and the handlebar (40) is further is movable about a second axis between the first non-operational position and a second non-operational position; and optionally,
the second axis is orthogonal to the first axis and parallel to a longitudinal axis of the support shaft (10).

12. The vegetation cutter of claim 10 or 11, wherein the handlebar clamp (55) comprises a clamp body (56) and a clamping plate (57) having complementary semi-circular handlebar clamping channels (59, 60) for receiving the handlebar (40); and
the handlebar carrier (50) further comprises a clamping bolt (61) for releasably clamping the clamp body (56) and the clamping plate (57) and for changing between the released configuration and the clamped configuration.

13. The vegetation cutter of claim 12, wherein when the clamping bolt (61) is released, the clamp body (56) is rotatable about the clamping bolt (61) with respect to the carrier body (51) for rotating the handlebar (40) between the operational position and the first non-operational position.

14. The vegetation cutter of claim 12 or 13, wherein the clamp body (56) comprises a finger (75) for actuating the kill-switch (70) when the finger (75) is aligned with the kill-switch (70).

15. The vegetation cutter of any one of claims 9 to 14, wherein the kill-switch (70) is arranged to ground a coil of the internal combustion engine (30) to prevent generation of ignition spark so as to prevent operation of the internal combustion engine (30) when the handlebar (40) is moved out of the operational position.

## Patentansprüche

1. Lenkstangenträger (50) zum Ankoppeln einer Lenkstange (40) an ein motorbetriebenes Werkzeug, wobei das motorbetriebene Werkzeug eine Tragstange (10) und einen Verbrennungsmotor (30) aufweist, der Lenkstangenträger (50) umfasst
einen Trägerkörper (51) zur Kopplung mit der Tragstange (10); und
eine Lenkstangenklemme (55), die an dem Trägerkörper (51) angebracht und so angeordnet ist, dass sie die Lenkstange (40) mit dem Trägerkörper (51) beweglich koppelt, so dass die Lenkstange (40) zwischen einer Betriebsposition und einer ersten Nicht-Betriebsposition bewegbar ist,
**dadurch gekennzeichnet, dass** der Lenkstangenträger (50) weiter einen Unterbrechungsschalter (70) aufweist, der schaltbar ist, um einen Betrieb des Verbrennungsmotors (30) zu verhindern, wenn die Lenkstange (40) aus der Betriebsposition heraus bewegt wird.

2. Lenkstangenträger (50) nach Anspruch 1, wobei die Lenkstange (40) über den Lenkstangenträger (50) um eine erste Achse zwischen der Betriebsposition und der ersten Nicht-Betriebsposition bewegbar ist, und die Lenkstange (40) weiter um eine zweite Achse zwischen der ersten Nicht-Betriebsposition und einer zweiten Nicht-Betriebsposition bewegbar ist, wobei die zweite Achse von der ersten Achse verschieden ist; und
wobei optional die zweite Achse orthogonal zu der ersten Achse und parallel zu einer Längsachse der Tragstange (10) angeordnet ist.

3. Lenkstangenträger (50) nach Anspruch 1 oder 2, wobei der Trägerkörper (51) und die Lenkerklemme (55) eine gelöste Anordnung und eine geklemmte Anordnung aufweisen, die die Lenkstange (40) in der Betriebsposition sichern; und
wobei der Unterbrechungsschalter (70) weiter schaltbar ist, um den Betrieb des Verbrennungsmotors (30) zu verhindern, wenn der Trägerkörper (51) und die Lenkstangenklemme (55) in der gelösten Anordnung sind.

4. Lenkstangenträger (50) nach Anspruch 3, wobei die Lenkstangenklemme (55) einen Klemmkörper (56) und eine Klemmplatte (57) mit komplementären halbkreisförmigen Lenkstangenklemmkanälen (59, 60) zur Aufnahme der Lenkstange (40) aufweist; und
der Lenkstangenträger (50) weiter eine Klemmschraube (61) zum lösbaren Klemmen des Klemmkörpers (56) und der Klemmplatte (57) und zum Wechseln zwischen der gelösten Anordnung und der geklemmten Anordnung umfasst.

5. Lenkstangenträger (50) nach Anspruch 4, wobei bei gelöster Klemmschraube (61) der Klemmkörper (56) gegenüber dem Trägerkörper (51) um die Klemmschraube (61) drehbar ist, um die Lenkstange (40) zwischen der Betriebsposition und der ersten Nicht-Betriebsposition zu drehen.

6. Lenkstangenträger (50) nach Anspruch 4 oder 5, wobei der Klemmkörper (56) einen Finger (75) zur Betätigung des Unterbrechungsschalters (70) aufweist, wenn der Finger (75) mit dem Unterbrechungsschalter (70) fluchtend ausgerichtet ist.

7. Lenkstangenträger (50) nach einem der Ansprüche 1 bis 6, wobei der Trägerkörper (51) eine Rohrklemme (54) aufweist, die lösbar ist, um eine Position des Lenkstangenträgers (50) entlang der Tragstange (10) zu verändern.

8. Lenkstangenträger (50) nach einem der Ansprüche 1 bis 7, wobei der Unterbrechungsschalter (70) so angeordnet ist, dass er eine Spule des Verbrennungsmotors (30) erdet, um die Erzeugung eines Zündfunkens zu verhindern, so dass der Betrieb des Verbrennungsmotors (30) verhindert wird, wenn der Lenker (40) aus der Betriebsposition heraus bewegt wird.

9. Ein Vegetationsschneider mit
eine Tragstange (10) mit einem ersten Ende und einem zweiten Ende
eine Antriebswelle, die in der Tragstange (10) angeordnet ist;
einen Werkzeugkopf (20), der an dem ersten Ende der Tragstange (10) angeordnet ist und ein drehend antreibbares Werkzeug trägt;
einen Verbrennungsmotor (30), der am zweiten Ende der Tragstange (10) angeordnet ist, um das drehend antreibbare Werkzeug über die Antriebswelle anzutreiben;
eine Lenkstange (40), die zwischen dem Werkzeugkopf (20) und dem Verbrennungsmotor (30) angeordnet ist, um es einem Nutzer zu ermöglichen, den Vegetationsschneider zu bedienen;
einen Lenkstangenträger (50), der die Lenkstange (40) beweglich mit der Tragstange (10) koppelt, wobei die Lenkstange (40) über den Lenkstangenträger (50) zwischen einer Betriebsposition, in der der Nutzer die Lenkstange (40) halten kann, um den Vegetationsschneider im Betrieb zu halten, und einer ersten Nicht-Betriebsposition bewegbar ist
**dadurch gekennzeichnet, dass** der Lenkstangenträger (50) einen Unterbrechungsschalter (70) aufweist, der schaltbar ist, um einen Betrieb des Verbrennungsmotors (30) zu verhindern, wenn die Lenkstange (40) aus der Betriebsposition heraus bewegt wird.

10. Vegetationsschneider nach Anspruch 9, wobei der Lenkstangenträger (50) umfasst:
einen Trägerkörper (51) und eine Lenkstangenklemme (55), wobei der Trägerkörper (51) und die Lenkstangenklemme (55) eine gelöste Anordnung und eine geklemmte Anordnung aufweisen, die die Lenkstange (40) in der Betriebsposition sichern; und
wobei der Unterbrechungsschalter (70) weiter schaltbar ist, um den Betrieb des Verbrennungsmotors (30) zu verhindern, wenn der Trägerkörper (51) und die Lenkstangenklemme (55) in der gelösten Anordnung sind.

11. Vegetationsschneider nach Anspruch 10, wobei der Lenker (40) über den Lenkstangenträger (50) um eine erste Achse zwischen der Betriebsposition und der ersten Nicht-Betriebsposition bewegbar ist, und der Lenker (40) weiter um eine zweite Achse zwischen der ersten Nicht-Betriebsposition und einer zweiten Nicht-Betriebsposition bewegbar ist; und
wobei optional die zweite Achse orthogonal zu der ersten Achse und parallel zu einer Längsachse der Tragstange (10) angeordnet ist.

12. Vegetationsschneider nach Anspruch 10 oder 11, wobei die Lenkstangenklemme (55) einen Klemmkörper (56) und eine Klemmplatte (57) mit komplementären, halbkreisförmigen Lenkstangenklemmkanälen (59, 60) zur Aufnahme der Lenkstange (40) aufweist; und
der Lenkstangenträger (50) weiter eine Klemmschraube (61) zum lösbaren Klemmen des Klemmkörpers (56) und der Klemmplatte (57) und zum Wechseln zwischen der gelösten Anordnung und der geklemmten Anordnung umfasst.

13. Vegetationsschneider nach Anspruch 12, wobei bei gelöster Klemmschraube (61) der Klemmkörper (56) gegenüber dem Trägerkörper (51) um die Klemmschraube (61) drehbar ist, um den Lenker (40) zwischen der Betriebsposition und der ersten Nicht-Betriebsposition zu drehen.

14. Vegetationsschneider nach Anspruch 12 oder 13, wobei der Klemmkörper (56) einen Finger (75) zur Betätigung des Unterbrechungsschalters (70) aufweist, wenn der Finger (75) mit dem Unterbrechungsschalter (70) fluchtend ausgerichtet ist.

15. Vegetationsschneider nach einem der Ansprüche 9 bis 14, wobei der Unterbrechungsschalter (70) so angeordnet ist, dass er eine Spule des Verbrennungsmotors (30) erdet, um die Erzeugung eines Zündfunkens zu verhindern, so dass der Betrieb des Verbrennungsmotors (30) verhindert wird, wenn der Lenker (40) aus der Betriebsposition heraus bewegt wird.

## Revendications

1. Support de guidon (50) pour l'accouplement d'un guidon (40) à un outil motorisé, l'outil motorisé comprenant une tige de support (10) et un moteur à combustion interne (30), le support de guidon (50) comprenant :
un corps de support (51) pour l'accouplement à la tige de support (10) ; et
une attache de guidon (55) attachée au corps de support (51) et disposée pour accoupler de manière mobile le guidon (40) au corps de support (51) de sorte que le guidon (40) est mobile entre une position opérationnelle et une première position non opérationnelle,
**caractérisé en ce que** le support de guidon (50) comprend en outre un coupe-circuit (70) pouvant fonctionner pour empêcher le fonctionnement du moteur à combustion interne (30) lorsque le guidon (40) est déplacé hors de la position opérationnelle.

2. Support de guidon (50) selon la revendication 1, le guidon (40) étant mobile par l'intermédiaire du support de guidon (50) autour d'un premier axe entre la position opérationnelle et la première position non opérationnelle, et le guidon (40) étant en outre mobile autour d'un second axe entre la première position non opérationnelle et une seconde position non opérationnelle, le second axe étant différent du premier axe ; et éventuellement,
le second axe étant orthogonal au premier axe et parallèle à un axe longitudinal de la tige de support (10).

3. Support de guidon (50) selon la revendication 1 ou 2, le corps de support (51) et l'attache de guidon (55) comprenant une configuration libérée et une configuration serrée fixant solidement le guidon (40) dans la position opérationnelle ; et
le coupe-circuit (70) pouvant en outre fonctionner pour empêcher le fonctionnement du moteur à combustion interne (30) lorsque le corps de support (51) et l'attache de guidon (55) se trouvent dans la configuration libérée.

4. Support de guidon (50) selon la revendication 3, l'attache de guidon (55) comprenant un corps de serrage (56) et une plaque de serrage (57) ayant des canaux de serrage de guidon semi-circulaires complémentaires (59, 60) pour recevoir le guidon (40) ; et
le support de guidon (50) comprenant en outre un boulon de serrage (61) pour serrer de manière à pouvoir être libéré le corps de serrage (56) et la plaque de serrage (57) et pour le changement entre la configuration libérée et la configuration serrée.

5. Support de guidon (50) selon la revendication 4, lorsque le boulon de serrage (61) est libéré, le corps de serrage (56) peut tourner autour du boulon de serrage (61) par rapport au corps de support (51) pour faire tourner le guidon (40) entre la position opérationnelle et la première position non opérationnelle.

6. Support de guidon (50) selon la revendication 4 ou 5, le corps de serrage (56) comprenant un doigt (75) pour actionner le coupe-circuit (70) lorsque le doigt (75) est aligné sur le coupe-circuit (70).

7. Support de guidon (50) selon l'une quelconque des revendications 1 à 6, le corps de support (51) comprenant une attache de conduite (54) qui peut être libérée pour changer une position du support de guidon (50) le long de la tige de support (10).

8. Support de guidon (50) selon l'une quelconque des revendications 1 à 7, le coupe-circuit (70) étant disposé pour mettre à la terre une bobine du moteur à combustion interne (30) pour empêcher la production d'une étincelle d'allumage afin d'empêcher le fonctionnement du moteur à combustion interne (30) lorsque le guidon (40) est déplacé hors de la position opérationnelle.

9. Débroussailleuse comprenant :
une tige de support (10) ayant une première extrémité et une seconde extrémité ;
un arbre d'entraînement localisé dans la tige de support (10) ;
une tête d'outil (20) localisée à la première extrémité de la tige de support (10) et disposée pour porter un outil pouvant être entraîné de manière à pouvoir tourner ;
un moteur à combustion interne (30) localisé à la seconde extrémité de la tige de support (10), pour entraîner l'outil pouvant être entraîné de manière à pouvoir tourner par l'intermédiaire de l'arbre d'entraînement ;
un guidon (40) localisé entre la tête d'outil (20) et le moteur à combustion interne (30), pour permettre à un utilisateur de manipuler la débroussailleuse ;
un support de guidon (50) accouplant de manière amovible le guidon (40) à la tige de support (10), le guidon (40) étant mobile par l'intermédiaire du support de guidon (50) entre une position opérationnelle dans laquelle l'utilisateur peut tenir le guidon (40) pour supporter la débroussailleuse durant l'utilisation et une première position non opérationnelle ; **caractérisée en ce que** le support de guidon (50) comprend un coupe-circuit (70) pouvant fonctionner pour empêcher le fonctionnement du moteur à combustion interne (30) lorsque le guidon (40) est déplacé hors de la position opérationnelle.

10. Débroussailleuse selon la revendication 9, le support de guidon (50) comprenant :
un corps de support (51) et une attache de guidon (55), le corps de support (51) et l'attache de guidon (55) ayant une configuration libérée et une configuration serrée fixant solidement le guidon (40) dans la position opérationnelle ; et
le coupe-circuit (70) pouvant en outre fonctionner pour empêcher le fonctionnement du moteur à combustion interne (30) lorsque le corps de support (51) et l'attache de guidon (55) se trouvent dans la configuration libérée.

11. Débroussailleuse selon la revendication 10, le guidon (40) étant mobile par l'intermédiaire du support de guidon (50) autour d'un premier axe entre la position opérationnelle et la première position non opérationnelle, et le guidon (40) étant en outre mobile autour d'un second axe entre la première position non opérationnelle et une seconde position non opérationnelle ; et éventuellement,
le second axe étant orthogonal au premier axe et parallèle à un axe longitudinal de la tige de support (10).

12. Débroussailleuse selon la revendication 10 ou 11, l'attache de guidon (55) comprenant un corps de serrage (56) et une plaque de serrage (57) ayant des canaux de serrage de guidon semi-circulaires complémentaires (59, 60) pour recevoir le guidon (40) ; et
le support de guidon (50) comprenant en outre un boulon de serrage (61) pour serrer de manière à pouvoir être libéré le corps de serrage (56) et la plaque de serrage (57) et pour le changement entre la configuration libérée et la configuration serrée.

13. Débroussailleuse selon la revendication 12, lorsque le boulon de serrage (61) est libéré, le corps de serrage (56) pouvant tourner autour du boulon de serrage (61) par rapport au corps de support (51) pour faire tourner le guidon (40) entre la position opérationnelle et la première position non opérationnelle.

14. Débroussailleuse selon la revendication 12 ou 13, le corps de serrage (56) comprenant un doigt (75) pour actionner le coupe-circuit (70) lorsque le doigt (75) est aligné sur le coupe-circuit (70).

15. Débroussailleuse selon l'une quelconque des revendications 9 à 14, le coupe-circuit (70) étant disposé pour mettre à la terre une bobine du moteur à combustion interne (30) pour empêcher la production d'une étincelle d'allumage afin d'empêcher le fonctionnement du moteur à combustion interne (30) lorsque le guidon (40) est déplacé hors de la position opérationnelle.
